Europäisches Patentamt

**European Patent Office**

**Office européen des brevets**

(19)

(11) Publication number: **0 009 062**
**A1**

(12) # EUROPEAN PATENT APPLICATION

(21) Application number: **78300388.2**

(22) Date of filing: **14.09.78**

(51) Int. Cl.³: **G 03 B 35/00,** G 02 B 27/02,
G 02 B 27/22

(43) Date of publication of application: **02.04.80**
**Bulletin 80/7**

(84) Designated Contracting States: **DE FR GB SE**

(71) Applicant: **Nerlich, Gunter, 95 Thorncliffe Park Drive
Apt. 1106, Toronto M4H 2L7 Ontario (CA)**

(72) Inventor: **Nerlich, Gunter, 95 Thorncliffe Park Drive
Apt. 1106, Toronto M4H 2L7 Ontario (CA)**

(74) Representative: **Harrison, David Christopher et al,
MEWBURN ELLIS & CO 70 & 72 Chancery Lane,
London WC2A 1AD (GB)**

(54) **A stereoscopic filmstrip, a method of manufacturing it and a stereoscopic viewer for viewing it.**

(57) A stereoscopic filmstrip (F) and associated viewer (20) are described. The filmstrip (F) is made from standard 35 mm film by a method which allows copies to be made using standard film copy equipment. Image frames are arranged on the strip in two longitudinal rows ($R_1R_2$) stereoscopically paired images (e. g. 1L, 1R) being in one of the longitudinal rows ($R_1$) and one of the images being spaced along the row, in relation to its paired image, by four intervening frames (e. g. 23R, 2L, 24R, 3L).

The viewer illuminates the filmstrip by reflection of incident light by mirror (120); a mask (94) in front of the filmstrip has apertures (96) to allow viewing of paired stereoscopic images (e. g. 1L, 1R) only. A filmstrip transport mechanism (30) in the viewer is a ratchet-driven wheel turnable stepwise by an amount corresponding to the spacing on the filmstrip (F) between a first pair of images (1L, 1R) and a successive pair of images (2L, 2R).

- 1 -

This invention relates generally to stereoscopic filmstrip viewers and is concerned more particularly with a filmstrip for use in such a viewer, with a filmstrip manufacturing method, and with a viewer per se.

A typical example of a conventional stereoscopic viewer is that sold under the trade mark "Viewmaster". Transparencies to be viewed are mounted in a disc-shaped holder which is inserted into a slot in the viewer. The holder is turned by hand to bring successive pairs of frames into position for viewing. The transparencies are illuminated by naturally available light entering through the back of the viewer. Accordingly, the viewer must be directed towards a source of light for proper illumination of the transparencies.

A problem with this type of viewer is that it cannot conveniently be used in association with reading material. For example, where the transparencies carry educational material or promotional material related to a commercial product, it may be convenient to provide written notes or other information to be read in conjunction with the filmstrips. Since this type of viewer

0009062

is normally used in an upwardly directed position in order to obtain adequate illumination, it is inconvenient for the user to continually have to look down at written material.

Also, the transparency holders are awkward and expensive to manufacture because the transparency frames must be individually mounted in the holder. Accuracy of mounting is of paramount importance in order to achieve proper registration of corresponding stereoscopic frames.

An object of the present invention is to provide an improved stereoscopic filmstrip, copies of which can be readily produced on a commercial basis using conventional film copying equipment.

According to this aspect of the invention there is provided a stereoscopic filmstrip formed from a standard 35 mm photographic transparency film which has a series of sprocket holes along each longitudinal margin and which has been divided along a longitudinal median line into two longitudinal halves, one of which forms said filmstrip and includes one of said marginal series of sprocket holes. The filmstrip includes a series of pairs of left and right hand stereoscopic frames arranged in a row longitudinally of the filmstrip, the respective left and right hand frames of each pair being spaced from one another longitudinally of the relevant row by four intervening frames and from the corresponding frames of the adjacent pairs each by one intervening frame. The frames are arranged in equally spaced relationship on the filmstrip with each successive group of three adjacent frames within an area which is of a size of approximately 12 mm x 36 mm and which is disposed in predetermined relationship with respect to said sprocket holes.

According to another aspect of the invention there is provided a method of manufacturing a stereoscopic filmstrip. The method comprises the steps of:

a) simultaneously exposing to a series of subjects intended to appear on the filmstrip, successive portions of two conventional still-camera films, each two simultaneous exposures being taken from positions which are spaced laterally to an extent appropriate to produce respective left and right stereoscopic frames;

b) processing the films;

c) separating individual frames from the two films;

d) photographing the individual frames onto a standard photographic transparency film in a sequence in which the frames are arranged in first and second parallel rows in each of which the frames are equally spaced from one another, the respective left and right hand frames for each subject being spaced from one another longitudinally of the relevant row by four intervening frames and from the corresponding frames of adjacent subjects each by one intervening frame, the frames in said first row being arranged in a viewing sequence from a first end of the film to a second end thereof with the upper ends of the frames disposed adjacent the frames in the second row, and the frames in said second row being arranged in a viewing sequence from said second end of the film to said first end with the upper ends of the frames disposed adjacent the frames in said first row;

e)  processing said film to produce a film element carrying said two rows of frames in the form of positive transparencies; and

f)  separating said film element along a longitudinal median line to produce two filmstrips.

According to a still further aspect of the invention there is provided a viewer which employs a stereoscopic filmstrip having a plurality of spaced perforations along one longitudinal margin and including a series of pairs of left and right hand stereoscopic frames.  The viewer includes a casing for receiving the filmstrip and the casing includes a front wall, a rear wall, and a top wall.  A pair of lenses are mounted in positions spaced transversely of the front wall for use in viewing the filmstrip.  Film masking means are disposed inside the casing at a position spaced from and generally parallel to said front wall.  The masking means defines a pair of apertures positioned to permit viewing of the respective left and right hand frames of successive frame pairs as the filmstrip is advanced through the viewer in use.  Means are provided for guiding the filmstrip in a path which extends transversely of the casing rearwardly of the masking means.

The viewer also includes a film transport mechanism disposed inside the casing and positioned laterally of said apertures in the masking means. The transport mechanism includes a film-engaging disc which is turnable about an axis normal to the direction of filmstrip movement and which has a peripheral series of teeth for engagement in said perforations in the filmstrip so that turning of the disc advances the filmstrip past said apertures. A drive member is provided for turning the disc and is itself turnable about an axis parallel to the turning axis of the disc. The drive member includes an operating lever which projects to the exterior of the casing for turning the member and which is movable from a rest position to a fully advanced position. The drive member is biassed to normally maintain the operating lever in said rest position. Ratchet means couple the drive member and disc so that movement of the operating lever from said rest position to said fully advanced position causes the disc to turn and advance the filmstrip unidirectionally by an amount equal to the spacing between successive pairs of films on said filmstrip. Detent means cooperate with said disc for preventing return movement of the disc in a direction counter to the film advance direction upon release of the operating lever. The viewer also includes means for illuminating the filmstrip. The illuminating means are defined by at least one light admitting aperture in the top wall of the casing, the aperture being positioned rearwardly of said masking means. Reflector means are arranged in an angular position at the rear of the film path for reflecting incoming light through the apertures in the masking means to illuminate the filmstrip.

The invention will be better understood by reference to the accompanying drawings, in which:-

Fig. 1 is a perspective view of a stereoscopic viewer according to the invention;

Fig. 2 is an exploded perspective view of the viewer of Fig. 1;

Fig. 2a is an enlarged detail of part of Fig. 2;

Fig. 3 is a horizontal sectional view on line III-III of Fig. 2;

Fig. 4 is a transverse sectional view on line IV-IV of Fig. 3;

Fig. 5 is a perspective view of part of the film transport mechanism of the viewer;

Figs. 6 to 9 are sequential views corresponding to part of Fig. 3 and illustrate the operation of the film transport mechanism;

Fig. 10 is a perspective view of the continuous filmstrip employed in the viewer shown in the previous figures;

Figs. 11 to 14 illustrate steps in the manufacture of the filmstrip of Fig. 10;

Fig. 15 is an enlarged view of part of Fig. 14.

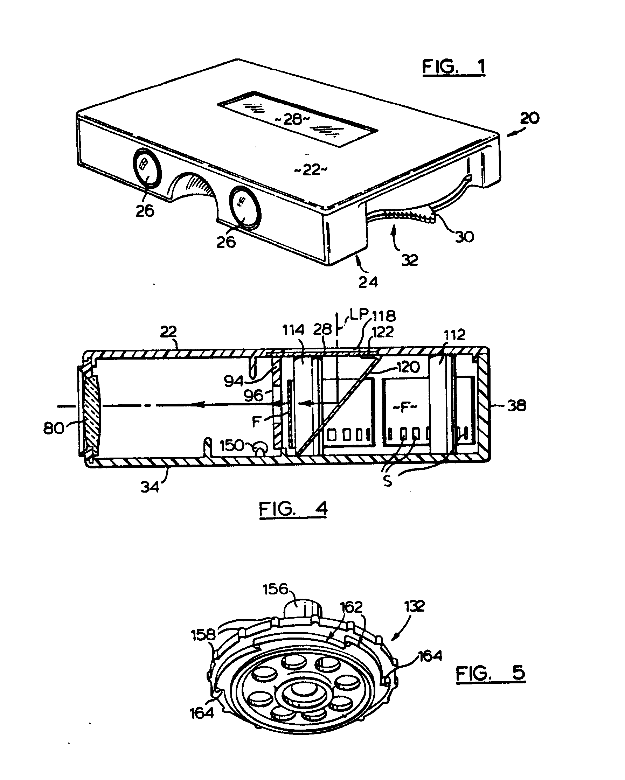

Reference will first be made to Fig. 1 which illustrates the external appearance of the viewer. As can be seen, the viewer includes a generally box-form casing generally denoted 20. The height of the casing as seen in Fig. 1 is relatively small and is designed so that the viewer will fit relatively and easily into a pocket or purse of a user, or into a small package for mailing purposes. For the same reason, the casing is smoothly contoured.

Casing 20 includes an initially separate top 22 and a bottom section 24 to which the top is permanently sealed during manufacture. A continuous stereoscopic filmstrip (to be described) is housed in casing 20 and is viewed through a pair of lenses 26 in the front of the casing. The film is illuminated using naturally available light which enters the casing through a translucent panel 28 in top 22. The viewer includes a film transport mechanism (also to be described) operated by a lever 30 which projects through a slot in the side of casing 20. As can be seen, the casing is recessed at 32 in the region of the lever 30 so that the lever is disposed within the general external contour of the casing, maintaining the smooth external appearance thereof.

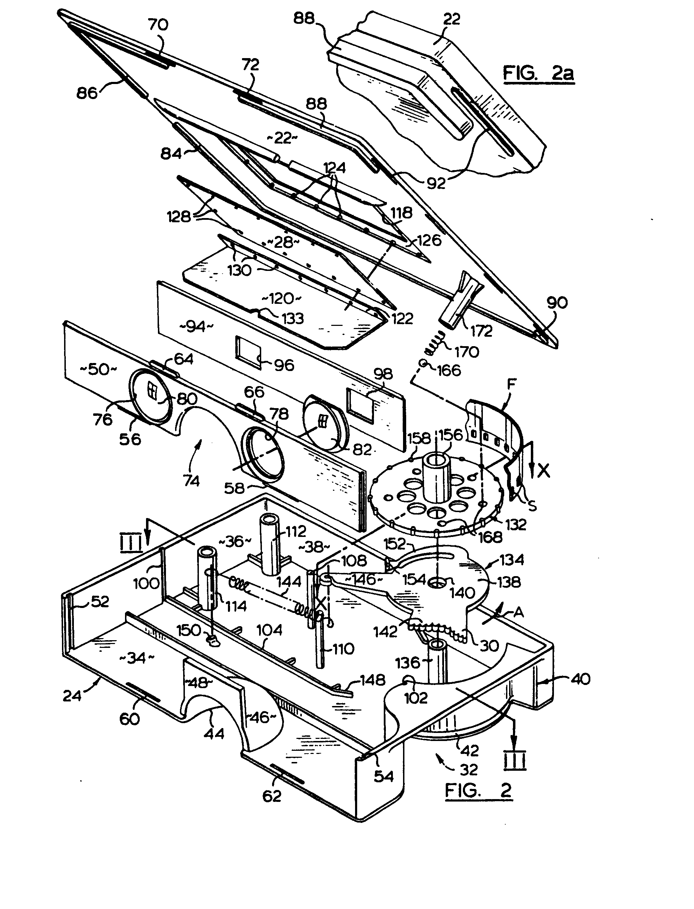

Fig. 2 shows the viewer of Fig. 1 in exploded form. As can be seen, the bottom section 24 of the casing 20 includes a rectangular base 34 having upstanding walls 36, 38 and 40 on three sides. Walls 36 and 38 are plain, while wall 40 is specially shaped to define the recess 32 for the operating lever of the film transport mechanism. Wall 40 also defines a slot 42 which extends parallel to base 34 and along which lever 30 moves. Wall 38 forms the rear wall of the casing and walls 36 and 40 the side walls.

Base 34 is formed with a generally semi-circular recess 44 which opens into the front edge of the base and which is surrounded by a bulbous formation 46 designed to accommodate the nose of a person using the viewer. A generally rectangular projection 48 extends upwardly from formation 46 and forms a support for an initially-separate front panel 50 of the viewer. The ends of panel 50 are fitted in inwardly directed vertical slots 52, 54 formed in the respective side walls 36 and 40 of the bottom section 24 of the viewer casing. Panel 50 fits in front of projection 48 and has depending tabs 56, 58 in its lower edge which fit into complimentary recesses 60, 62 in the base 34. Two similar tabs 64 and 68 on the upper edge of panel 50 fit into other, similar recesses 70 and 72 in the top 22 of the casing. A generally semi-circular recess 74 in panel 50 cooperates with the bulbous formation 46 on the base 34.

Panel 50 is formed with two circular apertures 76, 78 which receive plastic lenses 80 and 82 respectively fitted to panel 50 from the rear side and secured in place by sonic welding.

Casing top 22 is shaped to fit snugly onto the upper edges of the wall 36, 38 and 40 of the bottom section 24 and is secured to those walls so as to hold in place the front panel 50 and the other components of the viewer (to be described). Angled ribs 84, 86, 88 and 90 on the underside of top 22 fit inside the walls 36, 38 and 40 and the front panel 50 to laterally locate the top 22. The bottom section 24 and the top 22 of the viewer (as well as substantially all of the other components of the viewer) are injection molded in plastic. Top 22 is accordingly secured to the bottom section 24 by sonic welding. Miniature ribs, one of which is denoted 92 in Figs. 2 and 2a are provided on the underside of top 22 positions corresponding to the upper edges of the walls 36, 38 and 40 of the bottom section 24. These ribs are designed to fuse with the walls during the sonic welding operation and are designed so as other areas of the parts to be welded are not damaged during the actual welding operation. A similar technique is employed to prevent damage to the lenses 80, 82 when they are attached to the front panel 50 although, for ease of illustration, the miniature ribs have not been shown on lens 82.

A masking panel somewhat similar to panel 50 is located in the casing in a position parallel to and spaced from panel 50 and is formed with two film viewing apertures. This panel is shown at 94 in Fig. 2. The two apertures are denoted 96 and 98. These apertures are of standard 35 mm film size and are spaced to correspond with the spacing of the frames in each pair on the film contained in the viewer (to be described). The spacing corresponds to the spacing of the lenses 18 and 82 in panel 50 which in turn conforms generally with the spacing

0009062

between an average person's eyes. Panel 94 is fitted into vertical slots 100 and 102 in the walls 36 and 40 respectively of the bottom casing section 24 and is located against a rib 104 molded into the base 34.

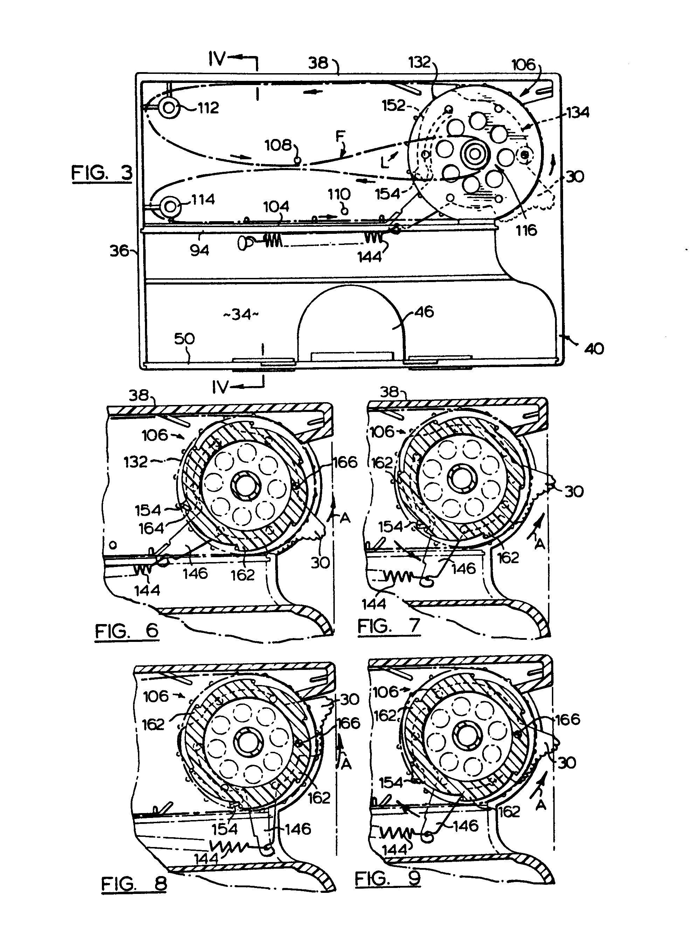

It will be convenient at this stage to refer to Fig. 3 which is, in effect a plan view of the assembled viewer with the top 22 removed. In this view, the filmstrip is represented by a chain dotted line denoted F and the film transport mechanism is generally denoted 106. The film is in the form of a continuous loop and is arranged to follow a path defined by the transport mechanism 106 and a series of guide pins denoted 108, 110, 112 and 114. As can be seen from Fig. 2, the pins 112 and 114 are in fact of tubular form while pins 108 and 110 are of solid cylindrical shape and are of somewhat samller diameter. All of the pins are integrally molded with the base 34 of the casing. The direction of film advance is indicated by arrows in Fig. 3 and it will be seen that pin 112 guides the film leaving the transport mechanism 106 adjacent the rear wall 38 of the casing and then directs the film inwardly into a bight or loop L in which the film passes around the central spindle assembly 116 (to be described) of the film transport mechanism 106. Portions of the film F respectively approaching and receeding from assembly 116 are separated by pin 108. Film leaving loop L passes around pin 114 and travels transversely of the casing closely adjacent the rear surface of panel 94 before it is again engaged by the transport mechanism 106. Pin 110 maintains the film closely adjacent panel 94 during its travel from pin 114 to the transport mechanism.

As indicated above, film being viewed is illuminated by naturally available light entering casing through the translucent panel 28 in its top 22. Fig. 4 illustrates the path of this light in travelling into and through the viewer. The light path is denoted LP in Fig. 4. As can be seen from that view, panel 28 is positioned behind an opening 118 in the top 22 of the viewer casing and is located just rearwardly of the viewing panel 94 and accordingly also just rearwardly of frames on the film F to be viewed. A reflector 120 is provided inside the casing to direct incoming light through the film F. Since the light can be considered entering the casing generally normal to the top 22, reflector 120 is positioned generally at a 45$^{\circ}$ angle and extends from the innermost margin of panel 28 to a position just rearwardly of the film F.

Referring again to Fig. 2, the reflector 120 is formed by a piece of cardboard having a white finish on its reflective surface. The reflector is secured in position by a flap 122 which is folding inwardly with respect to the main portion of the reflector so as to lie in contact with the under surface of the translucent panel 28. Panel 28 is attached to the top 22 by a series of small cylindrical "pips" or studs 124 arranged in a recess 126 around the opening 119 in top 22. The studs 124 pass through corresponding holes 128 in panel 28 and melt during the sonic welding operation performed to attach the top 22 to the bottom section 24 of the casing, the fused studs serving to hold the panel 28 in position. Reflector 120 is located along one longitudinal margin of panel 28 and its flap 122 is formed with openings 130 corresponding to the openings 128 along the relevant margin of panel 28. Accordingly, flap 122 can be positioned over the relevant studs 124 so that the reflector is also secured in place during the sonic welding operation. The cutout 133 in the bottom longitudinal margin of the main portion of the reflector 120 fits around the film guide pin 110, thereby further assisting in the location of the reflector.

Referring back to Fig. 2, the film transport mechanism includes a film-engaging disc 132 and a drive member 134 which is positioned below dis 132 and is adapted to drive the disc to advance the film as will be described. Disc 132 and member 134 are rotatably mounted in superposed position on a pin 136 which projects upwardly from the base 34 of the bottom casing section 24. Member 134 includes a main disc-shaped portion 138 having at its centre an aperture 140 which receives the pin 136. The operating lever 30 for the film transport mechanism (referred to above) is formed integrally at the periphery of the disc-shaped portion 138 of member 134 and projects through the slot 42 in the side wall 40 of the viewer casing as described above. It will be seen from Fig. 2 that lever 30 has a serrated outer surface 142 which is contoured to receive the thumb of a person using the viewer so as to facilitate operation of the transport mechanism. The direction of movement of lever 30 to advance the film is indicated by the arrow denoted A in Fig. 2. It will be appreciated that movement of lever 30 in the direction of arrow A will cause the drive member 134 to turn about pin 136 to an extent determined by the extent of movement of lever 30.

Drive member 134 is spring biassed to a position in which the operating lever 30 is disposed at the end of slot 42 nearest the front of the viewer as shown for example in Figs. 3 and 6. Member 138 is biassed by a spring 144, one end of which engages the outer end of a radial arm 146 on the disc-shaped portion 138 of member 134. Arm 146 extends below the internal panel 94 of the viewer and is held by spring 144 against an angled end portion 148 of the rib 104 molded into the basin 34 of the bottom viewer casing section. Accordingly, this end portion 148 defines the rest position of arm 146 and hence the rest position of the drive member 134. The opposite end of springs 144 is engaged with a hook member 150 molded onto base 34.

It will be appreciated from the foregoing that the drive member 134 is turnable about the pin 136 from the normal rest position in which it is shown in Fig. 6 progressively through the position of Fig. 7 to the Fig. 8 position in which spring 144 is fully extended. If lever 30 is released at this time, the drive member 134 will return to its rest position under the action of spring 144. Member 134 is coupled with the film-engaging disc 132 by what is in effect a pawl and ratchet arrangement designed so that disc 132 advances unidirectionally in increments each time lever 30 is moved from its rest position to its fully advanced position while return movement of the drive member under the action of spring 144 does not affect disc 132. The pawl and ratchet arrangement includes an integral spring-like arm 152 which projects from the disc-shaped portion 138 of drive member 134 at a position generally opposed to the position of lever 30 and which curves around the periphery of portion 138 to a position adjacent arm 146. A projection 154 at the outer end of arm 152 extends above the general plane containing the remainder of the member 134 for engagement with the underside of disc 132. Disc 132 is integrally connected to the lower end of a tubular member 156 which is turnably mounted on the pin 136 which also carries drive member 134. Around the periphery of disc 132 are a series of equally spaced sprocket teeth 158 for engagement in sprocket holes S in the film F.

Referring now more particularly to Fig. 5, it will be seen that the under side of disc 132 is formed with a series of ratchet teeth 162 which are disposed inwardly of the sprocket teeth 158 of disc 132. Each tooth 162 has a profile which progressively curves upwardly from the root of the teeth. Each tooth defines a shoulder 164 for engagement by the projection 154 on the drive member 134 (see Fig. 2). Figs. 6 to 9 illustrate the operation of this pawl and ratchet arrangement. In Fig. 6, the film transport mechanism is shown at rest with the projection 154 of the drive member engaged on one of the shoulders 164 of the ratchet teeth 162. Accordingly, movement of the operating lever 30 in the direction of arrow A in Fig. 6 (from its rest position towards its advanced position) causes projection 154 to rotate the disc 132 in the counter clockwise direction as shown in Figs. 6 to 9. Fig. 7 shows the components at an intermediate position before lever 30 has reached the end of its travel. This fully advanced position of the operating lever 30 is shown in Fig. 8. The transport mechanism is designed so that the peripheral movement of disc 132 which occurs when lever 30 moves from its rest position to its fully advanced position is equal to the length of two frames of film F. The purpose of this will become apparent later. In any event, assuming that lever 30 is now in its fully advanced position (Fig. 8), if the lever is released, the drive member 134 is returned to the rest position by spring 144. Disc 132 is restrained against return movement with drive member 138 by a spring biassed ball 166 (see Fig. 2) which engages in one of a series of angularly spaced depressions 168 in the upper surface of disc 132. Ball 166 is urged downwardly against the upper surface of disc 132 by a coil spring 170 housed in a tubular member 172 which depends from the underside of the casing top 22. The arrangement is in fact such that, when the viewer is fully assembled, ball 66 just projects from the lower end of tubular member 172. The depressions 168 are spaced so that the angular movement of disc 132 which occurs between a position in which ball 166 is engaged in one depression and a position in which the ball is engaged in the next depression, corresponds to movement of the operating lever 30 from the rest position to the fully advanced position. In Figs. 6, 8 and 9 the position of ball 166 is indicated by a black circle denoted 166. In each of these views, the ball 166 is engaged in one of the depressions 168.

It will be appreciated that each time lever 30 is moved from the rest position to the fully advanced position, the film F will be advanced (in the direction of the arrows in Fig. 3) by an amount corresponding to the length of two frames of film F. Because of the arrangement of the frames on the film (to be described) this will result in successive pairs of stereoscopic frames being positioned behind the apertures 96, 98 in panel 94 of the viewer so that the frames can be observed through the lenses 80 and 82. The frames displayed will be illuminated by incoming light reflected through the film by reflector 120. The provision of translucent panel 28 in the top 22 of the viewer, together with reflector 120 allows naturally available overhead light to be used for illuminating the film. This avoids the need for the viewer to be angled towards a source of light as in conventional viewers. An advantage of this arrangement is that the user can readily use the viewer in conjunction with other material, e.g. written notes.  The viewer can be used in an orientation in which it is angled generally downwardly towards the notes so that the user can readily shift his eyes from the lenses 80, 82 onto the notes adjacent the viewer.

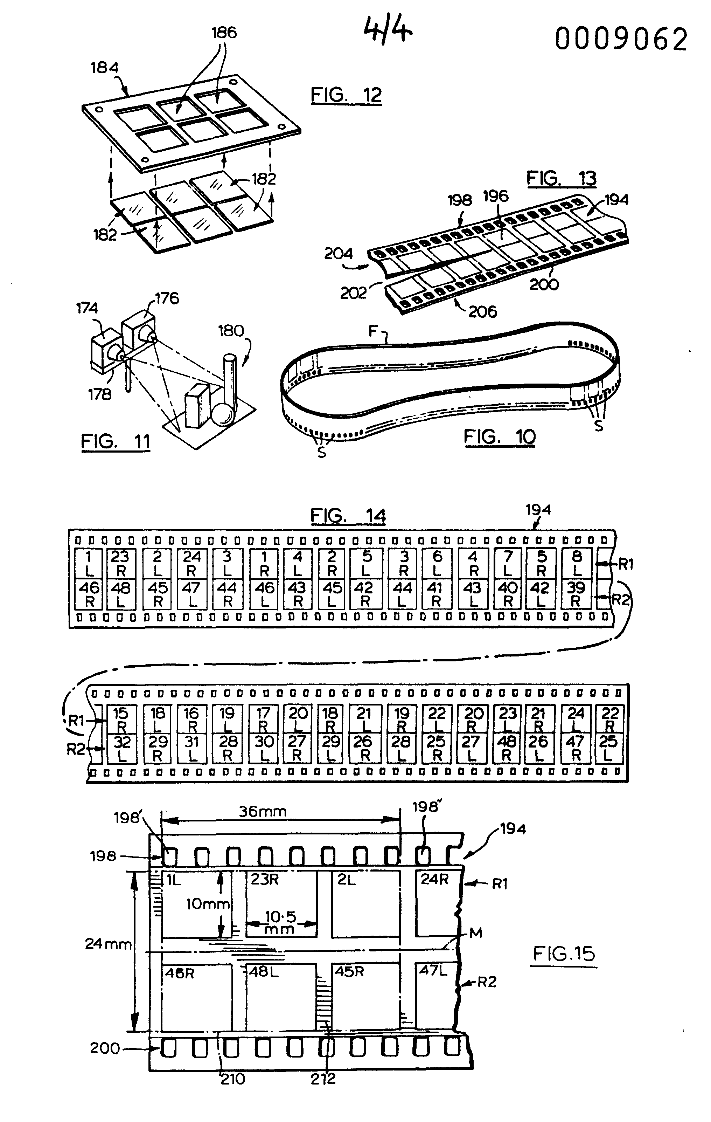

Figure 10 shows the filmstrip F used in the viewer described in conjunction with the previous figures. The filmstrip is made from conventional 35 mm colour transparency film as will be described.  A number of successive frames on the filmstrip are visible in Fig. 10 as are a number of the sprocket holes S, which are located along the bottom margin of the film (considered in the position in which it is used in the viewer).

Reference will now be made to Figs. 11 to 14 in more specifically describing the film and its method of manufacture.

By way of example, Fig. 11 shows two conventional 35 mm cameras 174, 176 mounted side by side on a support 178.  A subject to be photographed is generally indicated at 180.  The cameras are spaced by an amount corresponding generally to 1/30 of the distance between the cameras and the subject 180.  Although this spacing formula is not essential, it has been found to result in realistic stereoscopic pictures even for large camera-to-subject distances. Both cameras are loaded with conventional 35 mm colour transparency film.  Both films are simultaneously exposed to the subject 180, producing respective stereoscopic left and right hand frames showing the subject 180.  Other subjects to appear on the filmstrip are similarly photographed using subsequent frames of the films in cameras 174 and 176. After exposure of all of the frames on both films, the films are processed and the individual frames are identified and separated from adjacent frames in the film.

The frames are then photographed in a predetermined arrangement (to be described). First the frames are mounted in groups of six on a series of carriers, one of which is shown in Fig. 12. In that view, the individual frames are denoted by the reference numeral 182. The carrier is in the form of a cardboard sheet 184, formed with six rectangular apertures 186, each of a size corresponding to the size of the portion of each frame to be viewed. The frames are attached to the lower side of the carrier using pressure-sensitive tape (not shown). If forty-eight pairs of frames are used, sixteen cardboard carriers will be prepared in this way. The carriers are then photographed (from above) in a predetermined sequence using a 35 mm copy camera containing a standard 35 mm colour film (having a series of sprocket holes along each longitudinal margin). Each carrier (and associated six frames) is photographed on a single frame of the copy camera film. This film is processed to produce a "Master" film element part of which is indicated at 194 in Fig. 13, and which is shown in more detail in Figs. 14 and 15. As will be described, the Master is designed so that it can be readily copied using standard film copying equipment to produce as many identical film copies as may be required. Each copy will be divided along a longitudinal median line to form two relatively narrow elongate filmstrips such as filmstrip F.

In Fig. 13, the frames which appear on the Master are denoted 196 and the sprocket holes along each longitudinal margin are denoted 198 and 200 respectively. The Master itself could be used to make filmstrips directly by cutting the Master along a longitudinal median line as indicated at 202, the resulting filmstrips being denoted 204 and 206. However, this method would be used only in a situation in which relatively few copies of a particular series of frames is required. In a commercial environment in which a large number of copies of the filmstrip are required, the Master will normally be copied intact and the resulting copies divided longitudinally. For this purpose, the Master may readily be formed into an endless loop and copied in a high speed motion picture contact printer or in a conventional 35 mm filmstrip printer (see later). The resulting "copies" will each be divided along a longitudinal median line in the same fashion as described in relation to Master 194 to produce two filmstrips. Each filmstrip (whether produced from the Master or a copy) can then be formed into a continuous loop by splicing to produce a continuous loop filmstrip such as that shown in Fig. 10.

The arrangement of the frames on the Master film element is as shown in Fig. 14. It will of course be appreciated that this arrangement corresponds to the layout of the frames in the carriers 184 and to the sequence in which the carriers are photographed. It will be seen that the frames are arranged in two parallel rows R1 and R2. Each row contains 24 pairs of stereoscopic frames, the frames in each pair including a left hand view and a right hand view of the subject in question. For identification purposes, corresponding frames are denoted by the same number and the letters L and R are used to denote respectively the left and right hand frames of a pair.

In the embodiment being described, different frames are used in rows R1 and R2. Accordingly, film 194 as a whole carries 48 pairs of different frames and two different filmstrips will be produced from each copy of the Master. It will, of course, be appreciated that, in an alternative embodiment, it will be possible to make both filmstrips 202 and 204 the same by using 24 pairs of frames in duplicate. In this event, the frames in rows R1 and R2 would be the same.

Fig. 14 clearly illustrates that the respective left and right hand frames for each subject are spaced from one another longitudinally of the relevant row R1 or R2 by four intervening frames and are spaced from corresponding frames of adjacent subjects each by one intervening frame. For example, in row R1, the frames denoted $1_L$ and $1_R$ are spaced from one another by the frames $23_R$, $2_L$, $24_R$ and $3_L$ and the frames $1_L$ and $1_R$ are spaced from the frames $2_L$ and $2_R$ each by one frame ($23_R$ and $4_L$). It will also be noted that, in row Rl, the frames $23_R$ and $24_R$ are positioned adjacent frames $1_L$ and $2_L$ respectively. This arrangement ensures that, in a filmstrip made from the Master, the frames in each stereoscopic part will appear exactly in registration with the respective apertures 96 and 98 when the filmstrip is in use in the viewer and that successive stereoscopic pairs will be advanced for viewing in their proper sequence. In this connection it is to be noted that the film transport mechanism of the viewer is designed to advance the filmstrip at each operation by an amount corresponding to the length of two frames.

It will be noted from Fig. 10 and from the preceding description of the viewer that the sprocket holes in the filmstrip (denoted S in Fig. 10) are disposed at the lower margin of the filmstrip as used in the viewer. In other words, when the filmstrip is in the position shown in Fig. 10, the sprocket holes S are at the bottom and the lower ends of the frames are adjacent the sprocket holes. For this reason, the frames as positioned in each carrier (Fig. 12) and in the resulting Master and copies are disposed with their lower ends adjacent the relevant row of sprocket holes in the filmstrip. Considering the frames as shown in Fig. 14, therefore, the frames in row Rl would appear upside down although to avoid confusion, the numbers used to denote the frames have not been inverted in the drawing. It should also be noted that, for proper positioning of the frames with respect to the perforations, the frame sequence runs from left to right in row R1 and from right to left in row R2.

It will be appreciated that the arrangement of frames shown in Fig. 14 is advantageous in that it is not necessary to include blank or "jump" frames in order to achieve proper registration of the respective left and right hand frames in each pair with the viewing lenses 80 and 82 of the viewer. Also, the arrangement avoids the need for prisms, mirrors or other expedients in the light path between the viewer lenses and the filmstrip as is commonly found in the prior art.

A primary advantage of applicant's invention is that the Master from which the filmstrips are made can be readily copied using standard 35 mm size film copying equipment. This is possible by virtue of the particular arrangement and size of the stereoscopic frames on the Master film element. Thus, in manufacturing the Master, the individual stereoscopic frames are arranged in groups of six such that, on the Master, each group occupies exactly the same position and space as would a single 35 mm frame. Moreover, successive groups of six stereoscopic frames on the Master are spaced from one another by the same amount as successive 35 mm frames would be spaced. Accordingly, the correlation between the sprocket holes in the Master and the groups of stereoscopic frames is exactly the same as the correlation between the sprocket holes in a standard 35 mm camera film and the (larger) 35 mm frames. As a result, the Master stereoscopic element can be treated in the copier in exactly the same way as would a standard 35 mm camera film. For each individual frame which would be printed from a conventional film, the copier will print the six stereoscopic frames in each group.

Reference will now be made more particularly to Fig. 15 of the drawings which shows one end portion of the Master film element 194 of Fig. 14 on an enlarged scale. The film itself is 35 mm wide and carries the two rows R1 and R2 of stereoscopic frames as described previously in connection with Fig. 14. Each frame is itself of a width of approximately 10 mm and of a length of approximately 10.5 mm. The six frames are arranged on the film within a rectangular area of a length of 36 mm by a width of 24 mm. This area is indicated in dotted outline in 210 in Fig. 15 and is of the same size as a conventional American National Standard 35 mm frame. Thus, the individual frames are spaced from one another along the film by approximately 2 mm and each frame is spaced transversely from its neighbour by approximately 4 mm. Similarly, successive groups of frames are spaced from one another by approximately 2 mm. The frames are also centered transversely of the film.

The areas between the individual frames are masked by the carriers (see Fig. 12) in which the frames were mounted during manufacture of the Master so as to form an opaque border around each frame as represented by the area denoted 212 in Fig. 15.

The groups of frames are also carefully positioned in the longitudinal direction of the film so as to provide the same correlation between the groups of stereoscopic frames and the sprocket holes as would occur between conventional 35 mm frames and the sprocket holes. The sprocket holes 198 and 200 are precision formed in the film and are accurately spaced from one another in the longitudinal direction of the film. Each group of six stereoscopic frames is positioned in the longitudinal direction of the film so that (as viewed in Fig. 15) the left hand edge of the top left hand frame in each group is aligned exactly with the left hand edge with the appropriate one of the sprocket holes 198. Thus, the left hand edge of frame $1_L$ is aligned exactly with the left hand edge of sprocket hole 198' while the top left hand frame in the next group of frames in the film (part of which is visible in Fig. 15) is aligned with sprocket hole 198". Similar correlation is provided between subsequent groups of frames and others of the sprocket holes 200.

As a result of this arrangement, when the film is fed into a standard 35 mm copier, each group of six frames is treated by the copier as it would treat a standard 35 mm frame since the overall film area occupied by the frames and the frame to sprocket correlation is exactly the same as in the case of a standard 35 mm film. Thus, the Master can be readily and inexpensively copied using existing film copying equipment. This contrasts with prior art attempts to provide pairs of stereoscopic frames on 16 mm movie film which would require specially built copying equipment and which would accordingly be exorbitantly expensive to copy. Each copy will be an exact duplicate of the Master and will be divided along a longitudinal median line equivalent to the line indicated at M in Fig. 15 to form two filmstrips as discussed previously. In each filmstrip, each successive group of three adjacent frames is disposed within an area which is of a size of approximately 12 mm x 36 mm and which is disposed in predetermined relationship with respect to the sprocket holes in the filmstrip.

A further advantage of applicant's invention is that the film stock from which both the Master and copies are made is readily available at relatively low cost. Also, filmstrips can be made using virtually any quality 35 mm copy camera for producing the Master. The original stereoscopic frames may be produced using 35 mm cameras as described in connection with Fig. 11 although cameras of other sizes may be used. The resulting frames will be photographed using the 35 mm copy camera and will accordingly be reproduced in 35 mm format irrespective of the original frame size.

It will of course be appreicated that many other modifications are possible within the broad scope of the claims. For example, the individual stereoscopic frames could be mounted in any convenient fashion for photographing; the carriers described with reference to the drawings are not essential. Referring to the viewer, although the description refers to the use of a filmstrip in the form of a continuous loop, it will be understood that the viewer could be adapted to accept a discontinuous length of filmstrip. Film exit and entry slots could be provided in the casing of the viewer to permit passage of the filmstrip therethrough.

A further possible modification of the viewer would be to allow the casing to be opened by the user for replacement of the filmstrip. For example, the rear portion of the casing top could be hingeable to provide access to the filmstrip.

Also it should be noted that the filmstrip of the invention may be used (in strip or loop) form in any appropriate type of stereoscopic viewer and need not be used exclusively in a viewer of the type described herein.

Claims:

1. A stereoscopic filmstrip (F) characterized in that it is formed from a standard 35 mm photographic transparency film which has a series of sprocket holes along each longitudinal margin thereof and which has been divided along a longitudinal median line into two longitudinal halves, one of which forms said filmstrip (F) and includes one of said marginal series of sprocket holes, and wherein the filmstrip includes a series of pairs of left and right hand stereoscopic frames ($1_L$, $1_R$ to $24_L$, $24_R$ or $25_L$, $25_R$ to $48_L$ to $48_R$) arranged in a row R1 or R2 longitudinally of the filmstrip, the respective left and right hand frames of each pair being spaced from one another longitudinally of the relevant row by four intervening frames and from the corresponding frames of the adjacent pairs each by one intervening frame, said frames being arranged in equally spaced relationship on the filmstrip with each successive group of three adjacent frames within an area which is of the size of approximately 12 mm x 36 mm which is disposed in predetermined relationship with respect to said sprocket holes.

2. A filmstrip as claimed in claim 1, characterized in that respectively opposite ends of the filmstrip (F) are coupled together to form an endless loop, and wherein the filmstrip includes twenty-four pairs of stereoscopic frames arranged in the following sequence:-

$$1_L - 23_R - 2_L - 24_R - 3_L - 1_R - 4_L - 2_R - 5_L -$$
$$3_R - 6_L - 4_R - 7_L - 5_R - 8_L - 6_R - 9_L - 7_R - 10_L - 8_R$$

$11_L$ - $9_R$ - $12_L$ - $10_R$ - $13_L$ - $11_R$ - $14_L$ - $12_R$ - $15_L$ - $31_R$ - $16_L$ - $14_R$ - $17_L$ - $15_R$ - $18_L$ - $16_R$ - $19_L$ - $17_R$ - $20_L$ - $18_R$ - $21_L$ - $19_R$ - $22_L$ - $20_R$ - $23_L$ - $21_R$ - $24_L$ - $22_R$

wherein the numerals referred to above denote successive pairs of frames and the letters L and R indicate respectively the left and right hand frames of each pair.

3.     A stereoscopic filmstrip (F) characterized in that it is formed from a standard 35 mm photographic transparency film which has a series of sprocket holes along each longitudinal margin thereof and which includes a plurality of pairs of stereoscopic frames ($1_L$, $1_R$ to $24_L$, $24_R$ and $25_L$, $25_R$ to $48_L$, $48_R$) arranged in first and second parallel rows (R1 and R2) in each of which the frames are equally spaced from one another, the respective left and right hand frames for each subject being spaced from one another longitudinally of the relevant row by four intervening frames and from the corresponding frames of adjacent pairs each by one intervening frame, the frames in said first row (R1) being arranged in a viewing sequence from a first end of said film to the second end thereof with the upper ends of the frames disposed adjacent the frames in the second row (R2), and the frames in said second row (R2) being arranged in a viewing sequence from the second end of said film to said first end with the upper ends disposed adjacent the frames in said first row, each successive group of six frames along said film being disposed within an area and position (210) corresponding to the area and position which would be occupied by a standard 35 size mm frame; said filmstrip being formed by dividing the film along a longitudinal median line into two longitudinal halves, one of which forms said filmstrip (F).

4.    A method of manufacturing a stereoscopic filmstrip, characterized in that it comprises the steps of:

a)  simultaneously exposing to a series of subjects intended to appear on the filmstrip, successive portions of two conventional still-camera films, each two simultaneous exposures being taken from positions which are spaced laterally to an extent appropriate to produce respective left and right stereoscopic frames;

b)  processing the films;

c)  separating individual frames from the two films;

d)  photographing the individual frames on a standard photographic transparency film in a sequence in which the frames appear or the film in first and second parallel rows in each of which the frames are equally spaced from one another, the respective left and right hand frames for each subject being spaced from one another longitudinally of the relevant row by four intervening frames and from the corresponding frames of adjacent subjects each by one intervening frame, the frames in said first row being arranged in a viewing sequence from a first end of said film to a second end thereof with the upper ends of the frames disposed adjacent the frames in the second row, and the frames in said second row being arranged in a viewing sequence from said second end of said film to said first end with their upper ends disposed adjacent the frames in said first row;

e) processing said film to produce a film element carrying said two rows of frames in the form of positive transparencies; and

f) separating said film element along a longitudinal median line to produce two filmstrips.

5. A method as claimed in claim 4, characterized in that said standard photographic transparency film is of 35 mm size, and wherein the frames are arranged on said film such that each successive group of six frames in sequence along the film is disposed within an area which would ordinarily be occupied by a standard 35 mm frame and is in corresponding relationship with respect to sprocket holes formed in said film.

6. A method as claimed in claim 4 or 5 characterized in that in step e) includes producing a Master film element from said film and printing from said Master to produce said film element.

7. A method as claimed in claim 4, characterized in that each two simultaneous exposures are taken from positions which are spaced laterally from one another by an amount equal to 1/30th of the distance between the subject and each of said positions.

8. A viewer for a stereoscopic filmstrip (F) having a plurality of spaced perforations (S) along one longitudinal margin and including a series of pairs of left and right hand stereoscopic frames, characterized in that the viewer comprises:

a casing (20) for receiving the filmstrip (F), the casing including a front wall (50), a real wall (38), and a top wall (22);

a pair of lenses (26) mounted in positions spaced transversely of said front wall (50) for use in viewing said filmstrip (F);

film masking means (94) disposed inside the casing (20) at a position spaced from and generally parallel to said front wall (50), said masking means (94) defining a pair of apertures (96, 98) positioned to permit viewing of the respective left and right hand frames of successive frame pairs as the filmstrip (F) is advanced through the viewer in use;

means for guiding the filmstrip in a path which extends transversely of said casing rearwardly of the masking means;

a film transport mechanism (106) disposed inside the casing (20) and positioned laterally of said apertures (96, 98) in the masking means (94), said mechanism (106) including: a film-engaging disc (132) which is turnable about an axis normal to the direction of filmstrip movement and which has a peripheral series of teeth (158) for engagement in said perforations (S) in the filmstrip (F) so that turning of the disc advances the filmstrip past said apertures; a drive member (134) for turning said disc, said member itself being turnable about an axis parallel to the turning axis of the disc and including an operating lever (30) which projects to the exterior of the casing for turning the member and which is movable from a rest position to a fully advanced position; means (144) biassing said drive member to normally maintain the operating lever (30) in said rest position; ratchet means (154, 162) coupling said drive member and said disc so that movement of the operating lever (30) from said rest position to said fully advanced position causes the said disc to turn and advance the filmstrip unidirectionally by an amount equal to the spacing between successive pairs of frames on said filmstrip; and detent means (166) cooperating with said disc for preventing return movement of the disc in a direction counter to the film advance direction upon release of said operating lever; and,

means for illuminating the filmstrip, said means comprising: at least one light admitting aperture (118) in said top wall (22) of the casing, said aperture (118) being positioned rearwardly of said masking means (94); and reflector means (120) arranged in an angular position at the rear of the film path for reflecting incoming light through said apertures (118) in the masking means (94) to illuminate the filmstrip.

9. A viewer as claimed in claim 8, characterized in that said film-engaging disc (132) and drive member (134) of the transport mechanism (106) are arranged in superposed positions and are turnable about a common axis, and wherein said ratchet means comprises pawl means (152, 154) coupled with said drive member (134), and a peripheral series of teeth (162) integrally formed on said disc and operably engaged by said pawl means.

10.    A viewer as claimed in claim 8 characterized in that said means for illuminating the filmstrip further comprise a translucent light-transmitting panel (28) closing said aperture (118) in the top wall of the casing, and wherein said reflector means (120) is defined by a cardboard panel having a light reflective upper surface and coupled to said top wall of the casing adjacent said translucent panel.

FIG. 1

~28~

~22~

20

26

26

26

30

32

24

22

114  28  LP 118
122

112

94

96

120

F

38

80

F

~F~

34

150

S

FIG. 4

156

162

132

158

164

164

164

FIG. 5

2/4

0009062

FIG. 2a

FIG. 2

FIG. 3

FIG. 6

FIG. 7

FIG. 8

FIG. 9

4/4

0009062

FIG. 12

FIG. 13

FIG. 11

FIG. 10

FIG. 14

FIG. 15

# EUROPEAN SEARCH REPORT

EP 78 300 388.2

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE – B2 – 2 540 342 (CECCHINI) <br> * whole document * <br> -- | 1,8 | G 03 B 35/00 <br> G 02 B 27/02 <br> G 02 B 27/22 |
| | FR – A – 40 304/689 780 (MOLLIER) <br> * fig. 1, 4 * <br> -- | 1,8 | |
| | FR – A – 822 981 (LEITZ) <br> * fig. 1 to 4 * <br> -- | 1,8 | |
| | CH – A – 200 090 (ZEISS IKON) <br> * fig. 1, 2 * <br> -- | 1,8 | **TECHNICAL FIELDS SEARCHED (Int.Cl.³)** |
| | DE – A – Z 2 258 (ZEISS IKON) <br> * claims; fig. * <br> -- | 4 | G 02 B 27/00 <br> G 03 B 35/00 <br> G 03 C 9/00 |
| A | US – A – 3 473 870 (PLATT) <br> * claim 1 * <br> -- | | |
| L | US – A – 4 116 533 (NERLICH) <br> * whole document * <br> ---- | 1–10 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| | The present search report has been drawn up for all claims | | |
|---|---|---|---|
| Place of search | | Date of completion of the search | Examiner |
| Berlin | | 03-12-1979 | HOPPE |

EPO Form 1503.1 06.78